# EUROPÄISCHE PATENTANMELDUNG

(11) **EP 0 750 048 A2**
(43) Veröffentlichungstag der Anmeldung: **27.12.1996**
(21) Anmeldenummer: 96108704.6
(22) Anmeldetag: 31.05.1996
(51) Int. Cl.: C14B 5/00

(54) **Verfahren zum Schneiden oder Stanzen einzelner Teile aus einer Tierhaut**

(30) Priorität: 22.06.1995 DE 19522717
(71) Anmelder: DÜRKOPP ADLER AKTIENGESELLSCHAFT, D-33719 Bielefeld (DE)
(72) Erfinder: Bruder, Wolfgang, 33607 Bielefeld (DE)
(74) Vertreter: Rehmann, Klaus-Thorsten, Dipl.-Ing.

(57) **Zusammenfassung**

Es wird ein Verfahren zum Schneiden oder Stanzen einzelner Teile aus einer Tierhaut vorgeschlagen, bei dem die Konturen der einzelnen Teile in einem Rechner gespeichert und zu einem Schnittlagenbild zusammensetzbar sind und zur Optimierung des Zuschnitts das Schnittlagenbild individuell in Abhängigkeit von der Qualität der Haut erstellt und über eine Projektionseinrichtung auf die Haut projiziert wird, mit dem die Vorteile des großflächigen Nestens mit den Vorteilen des kleinflächigen Schneidens oder Stanzens kombinierbar sind.

## Beschreibung

Die Erfindung betrifft ein Verfahren zum Schneiden oder Stanzen einzelner Teile aus einer Tierhaut, wobei die Konturen der einzelnen Teile in einem Rechner gespeichert und zu einem Schnittlagenbild zusammensetzbar sind und zur Optimierung des Zuschnitts das Schnittlagenbild individuell in Abhängigkeit von der Qualität der Haut erstellt und über eine Projektionseinrichtung auf die Haut projiziert wird.

Ein solches Verfahren ist in der DE-C-36 27 110 offenbart. In den Rechner werden die einzelnen Konturen der auszuschneidenden Teile eingegeben und gespeichert. Die Bedienperson kann die Konturen einzeln abrufen und in allen Kombinationen auf einem Monitor sichtbar machen. Über einen elektronischen Projektor werden die auf dem Bildschirm sichtbar gemachten Konturen in Originalgröße auf die auf einem Tisch ausgebreitete Tierhaut projiziert und die Bedienperson kann unter Berücksichtigung der Fehlerstellen im Leder das Schnittlagenbild interaktiv erstellen.

Tierhäute können eine Größe von bis zu 3 x 3 Meter haben. Entsprechend müssen die Schneid- oder Stanztische ausgebildet sein, wenn aus der vollen Haut herausgearbeitet werden soll. Das Arbeiten aus der vollen Haut hat den Vorteil, daß die Erstellung des Schnittlagenbildes, also das Anordnen der auszuschneidenden oder auszustanzenden Teile auf der Haut ("Nesting" genannt), unter Berücksichtigung der durch die komplette Haut vorgegebenen Randbedingungen durchgeführt werden kann. Die diversen in einem Leder vorkommenden Fehlerstellen (Löcher, Narben, Risse, Farbunterschiede usw.) haben auf die Qualität des späteren Endprodukts unterschiedlichen Einfluß. So können bestimmte Fehler auf bestimmten auszuschneidenden oder auszustanzenden Teilen toleriert werden, während andere Fehler (beispielsweise Löcher) überhaupt nicht oder nur in bestimmten Bereichen eines Teiles akzeptiert werden können, wenn sie am späteren Endprodukt nicht mehr sichtbar sind.

Aus diesen beim Nesting einzuhaltenden Randbedingungen folgt, daß eine Optimierung des Ausnutzungsgrades, das heißt, das Verhältnis der Fläche der Haut zu der Fläche des realisierbaren Schnittlagenbildes nur möglich ist, wenn die vollständige Haut genestet wird. Aufgrund der Investitionskosten, die mit der Anschaffung einer Schneid- oder Stanzanlage verbunden sind, werden vielfach kleine Anlagen verwendet, auf denen keine komplette Haut bearbeitet werden kann. Entsprechend der Größe der eingesetzten Anlage ist die Haut aufzuteilen, also zu zerschneiden. Der Ausnutzungsgrad beim Nesten auf der geteilten Haut sinkt natürlich, was darauf zurückzuführen ist, daß in jedem Teil Gut-Bereiche bleiben, die für sich genommen zu klein sind, um mit einer entsprechenden Kontur eines auszuschneidenden Teiles belegt werden zu können.

Von dieser Problemstellung ausgehend soll ein gattungsgemäßes Verfahren zum Schneiden oder Stanzen fortgebildet werden, das es gestattet, den erzielbaren Ausnutzungsgrad auch dann zu optimieren, wenn die Tierhaut zum Schneiden oder Stanzen zuvor geteilt werden muß.

Zur Lösung des Problems werden folgende Verfahrensschritte vorgeschlagen:
- Versehen der Haut mit einem maschinenlesbaren Code,
- Erfassen der Kontur der Haut und der in ihr enthaltenen Fehlerstellen über eine Kamera und Abspeichern der erfaßten Daten in dem mit der Kamera verbundenen Rechner,
- Berechnen der Fläche der Haut über die erfaßte Kontur,
- Darstellen der Kontur und der Fehlerstellen auf einem mit dem Rechner verbundenen Bildschirm und Erstellen des individuellen Schnittlagenbildes,
- Zuordnen der erfaßten Daten und des erstellten Schnittlagenbildes zu dem auf der Haut angebrachten Code,
- Abbilden des Schnittlagenbildes auf der Haut durch eine Projektionsvorrichtung,
- Trennen der Haut etwa in Höhe ihrer Mitte durch einen manuellen Trennschnitt in zwei Hälften, wobei der Verlauf des Trennschnitts unter Berücksichtigung des Schnittlagenbildes vom Rechner ermittelt und über die Projektionseinrichtung angezeigt wird,
- Projizieren der aus der ursprünglich erfaßten Kontur und der Trennlinie resultierenden Umfangslinie jeder Hälfte auf dem Schneid- oder Stanztisch,
- Ausrichten der zu schneidenden oder zu stanzenden Hälfte an der auf den Schneid- oder Stanztisch projizierten Umfangslinie und abschließendes
- Schneiden oder Stanzen anhand des Schnittlagenbildes.

Mit diesem Verfahren werden die Vorteile des ganzflächigen Nestens und teilflächigen Schneidens bzw. Stanzens miteinander kombiniert. Das Nesten und Schneiden bzw. Stanzen kann an unterschiedlichen Stellen erfolgen. Da die komplette Haut genestet wird, läßt sich der Ausnutzungsgrad optimieren. Über den Rechner wird eine Trennlinie ermittelt, die die Haut in zwei Hälften teilt. Bei der Errechnung der Trennlinie kann der Rechner das Schnittlagenbild berücksichtigen, so daß die Trennlinie optimal an den genesteten Teilen vorbeigeführt wird. Der durchzuführende Trennschnitt wird über die Projektionseinrichtung auf die Haut projiziert, so daß die Bedienperson mit einem herkömmlichen Schneidmesser die Trennung durchführen kann. Der Schnittverlauf ist dabei in aller Regel nicht gerade, sondern kann entsprechend dem optimierten Ergebnis vielfältig gekrümmt sein. Aufgrund der Zuordnung des Schnittlagenbildes zu der Kodierung ist die Haut gegenüber dem Rechner individualisiert. Nach Einlesen des Codes wird die Haut später ihrem Schnittlagenbild zuzuordnen sein. Über eine oberhalb dem Schneid- oder Stanztisch angeordnete Projektionseinrichtung wird die jeweils zu schneidende bzw. stanzende Umrißlinie der Haut projiziert, so daß ein Ausrichten der Hauthälfte durch die Bedienperson an der projizierten Linie möglich ist. Das anschließende Ausschneiden bzw. Ausstanzen der gewünschten Zuschnitteile aus den Hauthälften kann sowohl CNC-gesteuert als auch konventionell, das heißt, über handgeführte, entlang der dann zu projizierenden Schnittlagenbilder oder nach Auflegen von Schneideisen auf die projizierten Schnittlagenbilder erfolgen.

Mit dem erfindungsgemäßen Verfahren ist es möglich, die Vorarbeiten an der Haut, die durch qualifiziertes Personal durchgeführt werden müssen, vorzunehmen und das eigentliche Schneiden direkt in den Fertigungsbetrieb oder gar in Niedriglohnländer zu verlegen. Trotz Erzielung eines hohen Ausnutzungsgrades können kleine Teilflächen erzeugt werden, die aus ergonomischen Gesichtspunkten vorteilhaft für die Handhabung geeignet sind und für das Schneiden von Hand an die Reichweite der menschlischen Hand angepaßt werden können. Teile mit kleineren Abmessungen haben konsequenterweise auch ein geringeres Gewicht, so daß das Anheben, das Ausrichten und das Transportieren deutlich erleichtert wird.

Vorzugsweise kann das erstellte und auf die Haut projizierte Schnittlagenbild interaktiv von der Bedienperson korrigiert und das korrigierte Schnittlagenbild im Rechner gespeichert werden. Dadurch können auch kleinere Fehler, wie beispielsweise Farbunterschiede, berücksichtigt werden, die von der Kamera nicht eindeutig erkennbar sind.

Die Fehlerstellen werden bei einer bevorzugten Ausführungsform von der Bedienperson lokalisiert und für die Kameradetektion markiert. Als Markierung ist beispielsweise ein Einkreisen mit einer einen entsprechenden Kontrast bietenden Schnur möglich, um eine Beschädigung, insbesondere sehr feinen Leders durch Farbe oder Kreide, zu vermeiden.

Damit die Bedienperson bei der Durchführung des Trennschnitts ihre volle Konzentration hierauf verwenden kann, kann das Schnittlagenbild während der Projektion des Trennschnitts ausgeblendet werden.

Wenn die Tierhaut mit zwei maschinenlesbaren Codes so versehen wird, daß jede Hauthälfte einen eigenen Code erhält, kann in beliebiger Reihenfolge der Hauthälften die Bearbeitung vorgenommen werden.

Besonders vorteilhaft an dem Gesamtverfahren stellt sich dar, daß das Nesten und Schneiden bzw. Stanzen an unterschiedlichen Orten oder zu unterschiedlichen Zeiten erfolgen kann. Es kann folglich zunächst eine gesamte Monatsproduktion genestet werden und die genesteten Hauthälften werden entsprechend gelagert. Je größer die Anzahl der zu genesteten Häute ist, um so höher ist die zu erwartende Qualität des Endprodukts, weil eine Vielzahl von zueinander beispielsweise farblich passender Häute geschnitten bzw. gestanzt werden kann, so daß keine Farbunterschiede in der später herzustellenden Ledergarnitur oder Fahrzeugpolsterung auftreten.

Anhand einer Zeichnung soll das erfindungsgemäße Verfahren nachfolgend näher erläutert werden. Es zeigt:
- Figur 1: - eine Anordnung zum Nesten,
- Figur 2: - die projizierte Schnittbilddarstellung auf die Haut gemäß Sichtpfeil II nach Figur 1,
- Figur 3: - die eine Hauthälfte,
- Figur 4: - die andere Hauthälfte.

Auf den Tisch 1 wird die Tierhaut 2 aufgelegt und ausgebreitet. Über dem Tisch 1 ist eine mit dem Rechner 10 verbundene Kamera 9 und eine Projektionseinrichtung 8 angeordnet. Im Rechner 10 sind in bekannter Weise die Konturdaten einzelner aus der Haut 2 auszuschneidender bzw. auszustanzender Teile 7 gespeichert.

Auf die Haut 2 sind zu ihrer Indentifikation zwei Barcodes 5a, 5b aufgeklebt. Von der über dem Tisch 1 angeordneten Kamera 9 werden die Kontur 2' der Haut 2 und die in ihr bzw. auf ihr befindlichen Fehlerstellen 3, 4 erfaßt. Gleichzeitig können auch die Barcodes 5a, 5b von der Kamera 9 erfaßt und mit den Daten bezüglich der Kontur 2' und der Fehlerstellen 3, 4 an den Rechner 10 gegeben werden. Um die Fehlerstellen 3, 4 für die Kamera deutlich erkennbar werden zu lassen, wurden diese zuvor von einer Bedienperson entsprechend markiert. Eine solche Markierung erfolgt vorzugsweise durch eine kontrastreiche Schnur, die um die Fehlerstelle herumgelegt wird. Gleichzeitig kann eine für die Kamera identifizierbare Kennzeichnung der Fehlerqualität erfolgen.

Entsprechend der erfaßten Kontur 2', der ermittelten Fehlerstellen 3, 4 und deren Qualität wird im Rechner das Schnittlagenbild durch optimierte Anordnung der Teile 7 erstellt und auf dem Bildschirm 11 zusammen mit der Wiedergabe der Haut 2 dargestellt. Gleichzeitig wird das erstellte Schnittlagenbild über die mit dem Rechner 10 verbundene Projektionseinheit 8, die vorzugsweise ein Laser-Projektor ist, auf die Haut 2 projiziert. Gegebenenfalls kann eine Bedienperson das projizierte Schnittlagenbild interaktiv beeinflussen und die projizierten Konturen der Teile 7 zur weiteren Optimierung des Ausnutzungsgrades verschieben. Das optimierte Schnittlagenbild wird dann im Rechner 10 gespeichert. Zur Optimierung des Ausnutzungsgrades ist es notwendig, daß zuvor die Fläche der Haut ermittelt wurde, was im Rechner über die aufgenommene Umfangskontur der Haut erfolgen kann. Die Fläche der einzelnen im Rechner gespeicherten Teile-Konturen ist bekannt. Über die Zusammenstellung des Schnittlagenbildes ist folglich eine Aussage über die Gesamtfläche des erreichbaren Zuschnitts möglich, so daß der Ausnutzungsgrad ermittelt werden kann. Vorteilhaft ist, wenn auf dem Bildschirm 11 der erreichbare Ausnutzungsgrad permanent angezeigt wird, damit die Bedienperson auch eine Rückmeldung erhält, ob der Ausnutzungsgrad tatsächlich optimiert wurde, bzw. ob ein ausreichender Ausnutzungsgrad erreicht worden ist oder weitere Optimierungsarbeiten angebracht erscheinen.

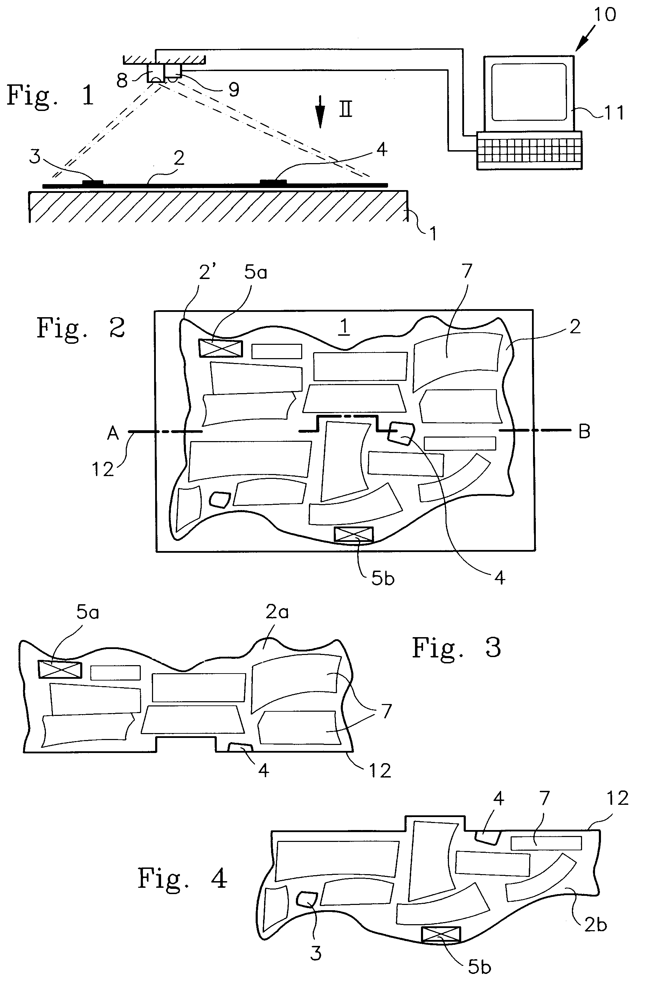

Im Rechner wird eine Trennlinie 12 ermittelt, die die Haut 2 etwa in ihrer Mitte trennt, ohne Teile 7 des Schnittlagenbildes zu kreuzen. Die ermittelte Linie 12, die in Figur 2 von der mit A bezeichneten Stelle zu der mit B bezeichneten Stelle reicht und einen gewundenen Verlauf hat, wird über die Projektionseinrichtung 8 auf die auf dem Tisch 1 ausliegende Tierhaut 2 projiziert. Gleichzeitig kann die Projektion der Teile 7 des Schnittlagenbildes ausgeblendet werden, so daß auf der Haut 2 nur der Verlauf der Trennlinie 12 erkennbar ist. Entlang dieser Vorgabe wird von der Bedienperson die Haut 2 manuell mit einem Schneidmesser in zwei Hälften 2a, 2b geteilt. Jeder Hälfte 2a, 2b ist ein Barcode 5a, 5b zugeordnet. Durch diese Zuordnung kann im Rechner 10 das aus dem Gesamt-Schnittlagenbild resultierende Teil-Schnittlagenbild für jede Hauthälfte 2a, 2b generiert werden.

Die Hauthälften 2a, 2b werden vom Tisch 1 abgenommen und können entweder zwischengelagert oder der Schneid- bzw. Stanzanlage zugeführt werden. Über dem Tisch, der hier nicht näher dargestellten Schneid- bzw. Stanzanlage, sind in zu Figur 1 analoger Wweise eine Kamera und eine Projektionseinrichtung angeordnet. Diese sind ebenfalls mit dem Rechner 10 verbunden. Die Barcodes 5a, 5b der Hauthälften 2a, 2b sind maschinenlesbar, so daß dem Rechner 10 mitgeteilt werden kann, welche Hauthälfte auf den Tisch der Schneid- bzw. Stanzanlage aufgelegt ist. Über den Projektor wird dann die aus der ursprünglichen Konturlinie 2' und dem Trennschnitt 12 im Rechner generierte Kontur der jeweiligen Hauthälfte 2a, 2b auf den Tisch projiziert und die Hauthälfte 2a, 2b entlang dieser Umrißlinie von der Bedienperson ausgerichtet.

Das Ausschneiden bzw. Ausstanzen der Teile 7 aus der jeweiligen Hauthälfte 2a, 2b erfolgt dann entweder numerisch mit einer CNC gesteuerten Anlage, die vom Rechner 10 kontrolliert wird und das zugeordnete Teil-Schnittlagenbild abarbeitet oder wird manuell durchgeführt. Beim manuellen Schneiden oder Stanzen wird über den Projektor das Teil-Schnittlagenbild auf die Hauthälfte 2a, 2b projiziert und die Bedienperson kann entlang der projizierten Linien den Zuschnitt vornehmen.

## Patentansprüche

1. Verfahren zum Schneiden oder Stanzen einzelner Teile aus einer Tierhaut, wobei die Konturen der einzelnen Teile in einem Rechner gespeichert und zu einem Schnittlagenbild zusammensetzbar sind und zur Optimierung des Zuschnitts das Schnittlagenbild individuell in Abhängigkeit von der Qualität der Haut erstellt und über eine Projektionseinrichtung auf die Haut projiziert wird, **gekennzeichnet durch** folgende Schritte:
- Versehen der Haut mit einem maschinenlesbaren Code,
- Erfassen der Kontur der Haut und der in ihr enthaltenen Fehlerstellen über eine Kamera und Abspeichern der erfaßten Daten in dem mit der Kamera verbundenen Rechner,
- Berechnen der Fläche der Haut über die erfaßte Kontur,
- Darstellen der Kontur und der Fehlerstellen auf einem mit dem Rechner verbundenen Bildschirm und Erstellen des individuellen Schnittlagenbildes,
- Zuordnen der erfaßten Daten und des erstellten Schnittlagenbildes zu dem auf der Haut angebrachten Code,
- Abbilden des Schnittlagenbildes auf der Haut durch eine Projektionsvorrichtung,
- Trennen der Haut etwa in Höhe ihrer Mitte durch einen manuellen Trennschnitt in zwei Hälften, wobei der Verlauf des Trennschnitts unter Berücksichtigung des Schnittlagenbildes vom Rechner ermittelt und über die Projektionseinrichtung angezeigt wird,
- Projizieren der aus der ursprünglich erfaßten Kontur und der Trennlinie resultierenden Umfangslinie jeder Hälfte auf dem Schneid- oder Stanztisch,
- Ausrichten der zu schneidenden oder zu stanzenden Hälfte an der auf den Schneid- oder Stanztisch projizierten Umfangslinie und abschließendes
- Schneiden oder Stanzen anhand des Schnittlagenbildes.

2. Verfahren nach Anspruch, **dadurch gekennzeichnet**, daß das erstellte und auf die Haut projizierte Schnittlagenbild interaktiv von einer Bedienperson korrigiert und das korrigierte Schnittlagenbild im Rechner gespeichert wird.

3. Verfahren nach Anspruch 1, **dadurch gekennzeichnet**, **daß** die Fehlerstellen von einer Bedienperson lokalisiert und für die Kameradetektion markiert werden.

4. Verfahren nach Anspruch 1, **dadurch gekennzeichnet**, **daß** jede Hauthälfte mit einem maschinenlesbaren Code versehen wird.

5. Verfahren nach Anspruch 1, **dadurch gekennzeichnet**, **daß** während der Projektion des Verlaufs des Trennschnitts auf die Haut das Schnittlagenbild ausgeblendet wird.

6. Verfahren nach Anspruch 1 oder 4, **dadurch gekennzeichnet**, **daß** zur Kodierung ein Barcode-Aufkleber auf der Haut angebracht wird.
